Europäisches Patentamt

European Patent Office

Office européen des brevets

(11) Veröffentlichungsnummer: **0 219 007**
**B1**

(12) **EUROPÄISCHE PATENTSCHRIFT**

(45) Veröffentlichungstag der Patentschrift:
20.12.89

(51) Int. Cl.⁴: **B 66 C 13/10**

(21) Anmeldenummer: 86113635.6

(22) Anmeldetag: 02.10.86

(54) Abschaltvorrichtung für Krananlagen.

(30) Priorität: 12.10.85 DE 3536472

(43) Veröffentlichungstag der Anmeldung:
22.04.87 Patentblatt 87/17

(45) Bekanntmachung des Hinweises auf die Patenterteilung:
20.12.89 Patentblatt 89/51

(84) Benannte Vertragsstaaten:
AT BE CH DE ES FR GB IT LI LU NL SE

(56) Entgegenhaltungen:
DE-A- 2 345 702
DE-A- 2 945 746
DE-A- 3 116 625
US-A- 3 850 308

(73) Patentinhaber: Rohr GmbH, Franz-Kirrmeier-Strasse 17,
D-6720 Speyer (DE)

(72) Erfinder: Rohr, Wolfgang, Zeppelinstrasse 16,
D-6720 Speyer (DE)
Erfinder: Rohr, Jochen, Zeppelinstrasse 16,
D-6720 Speyer (DE)

(74) Vertreter: Fischer, Wolf-Dieter, Dipl.-Ing.,
Kurfürstenstrasse 32, D-6700 Ludwigshafen/Rhein (DE)

ACTORUM AG

**Beschreibung**

Die Erfindung betrifft eine Abschaltvorrichtung für Krananlagen mit einem eine Haltewinde aufweisenden Hubwerk für einen an Seilen aufgehängten Greifer.

Das Aufsetzen eines Seil- oder Motorgreifers auf dem Seeboden ist optisch nicht erkennbar, so daß entsprechende Abschaltvorrichtungen installiert werden, die automatisch die Abwärtsbewegung unterbrechen, wenn der Greifer auf dem Seeboden aufsetzt und Schlaffseil entsteht, wobei das Windwerk abgeschaltet wird. Zur Lösung dieses Problems sind die verschiedensten Meßeinrichtungen bekannt, wobei für die Meldung des Abschaltens Kobold-Motore durch Messung der Motorströme eingesetzt werden. Es sind auch sogenannte Stößelschalter bekannt, bei denen die Getriebebelastung gemessen wird. Weiterhin erfolgt Meldung über Dehnmeßstreifen durch Messung des Seilzuges. Es sind auch schon an der Seiltrommel Vorrichtungen vorgesehen worden, die über Wiegeeinrichtungen das Aufsetzen des Greifers erfassen (DE-A-2 945 746).

Diese bekannten Vorrichtungen haben den Nachteil, daß sie verhältnismäßig ungenau arbeiten und unter besonders schwierigen Bedingungen, z.B. wenn der Greifer auf dem Seeboden umfällt, gar keine Schlaffseilerkennung gemeldet wird. Weiterhin sind die bekannten Vorrichtungen mechanisch sehr aufwendig und unterliegen einem hohen Verschleiß. Weiterhin sind häufig Wartungsarbeiten erforderlich, die eine Unfallgefahr mit sich bringen.

Der Erfindung liegt die Aufgabe zugrunde, eine derartige Abschaltvorrichtung, so auszubilden, daß sie, bei einfachem Aufbau und den rauhen Betriebsbedingungen bei Krananlagen, insbesondere bei Schwimmbaggern, ohne Störungen eine gewichtsunabhängige Abschaltung des Hubwerks ermöglicht.

Diese Aufgabe wird nach der Erfindung dadurch gelöst, daß am Greifer ein Seil oder Kabel angebracht ist, das über Umlenkrollen geführt und gespannt ist, und daß an einer der Umlenkrollen ein Initiator angebracht ist, der Impulse erzeugt und beim Ausbleiben der Impulse den Antrieb abschaltet.

Vorteilhaft ist, daß an dem Seil oder Kabel ein Gewicht mit Rolle aufgehängt ist.

Eine vorteilhafte Ausführungsform besteht darin, daß ein berührungsloser Initiator vorgesehen ist, der durch einen eingebauten Schwingkreis in Resonanz versetzbar ist, wobei auf der Umlenkrolle die Schwingungen dämpfende und damit Impulse erzeugende Eisensegmente angeordnet sind.

Weiterhin ist es vorteilhaft, daß an der Umlenkrolle ein Magnetschalter angeordnet ist, bestehend aus Magnetpolen, denen ein Mikroschalter mit einem Auslösemagnet zugeordnet ist.

Es ist vorteilhaft, daß an der Umlenkrolle ein Generator angeordnet ist und eine Spannungsunterbrechung als Abschaltimpuls nutzbar ist.

Weiterhin wird vorgeschlagen, daß die vom Initiator erzeugten, dem Weg des Greifers proportionalen Impulse auf ein Aufzeichnungsgerät übertragen werden.

Die Erfindung bringt den Vorteil, daß mit einer äußerst einfachen Einrichtung das Aufsetzen des Greifers auf dem Seeboden festgestellt werden kann, so daß sich die Vorrichtung auch bei programmierbaren Steuerungen einsetzen läßt, bei denen sämtliche Baggerfunktionen automatisch gesteuert werden. Hierbei ist es erforderlich, eine hundertprozentige Schlaffseilerkennungseinrichtung einzusetzen, um einen sicheren, vollautomatischen Baggervorgang zu gewährleisten. Die Abschaltvorrichtung kann auch bei den verschiedensten Krantypen aus Arbeits- und Sicherheitsgründen vorteilhaft eingesetzt werden.

Die Erfindung wird in der nachfolgenden Beschreibung anhand eines in den Zeichnungen dargestellten Ausführungsbeispiels näher erläutert.

Es zeigen,

Fig. 1 eine erste Ausführungsform für eine derartige Abschaltvorrichtung an einem Seilgreifer,

Fig. 2 eine derartige Einrichtung an einem Motorhydraulikgreifer,

Fig. 3 eine Seitenansicht der für die Abschaltvorrichtung verwendeten Umlenkrolle,

Fig. 4 eine Vorderansicht der Rolle gemäß einem Ausschnitt und

Fig. 5 eine Ausführungsform einer elektronischen Schaltung für das Verarbeiten der von der Abschaltvorrichtung gelieferten Impulse.

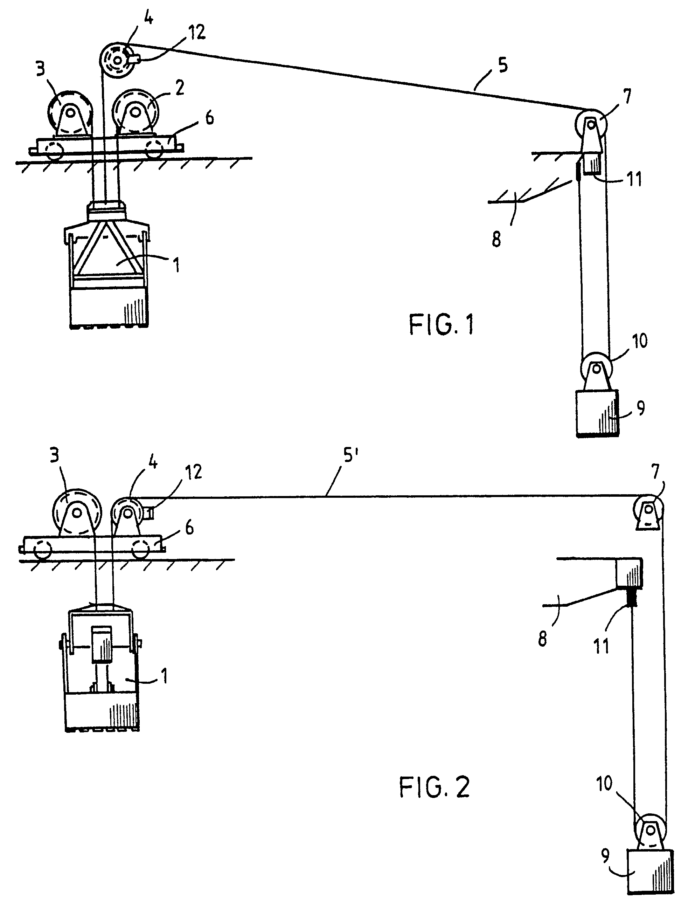

Die Figur 1 zeigt die Anordnung eines Seilgreifers 1 an einer Laufkatze 6, wobei die Laufkatze 6 in bekannter Weise an Aufbauten eines Schwimmbaggers angeordnet ist. An der Laufkatze 6 befinden sich eine Schließwinde 2 und eine Haltewinde 3. Der Greifer 1 kann auch an einem Wippausleger angeordnet sein.

Mit dem Greifer 1 ist ein Seil 5 verbunden, das über eine mit dem Greifer 1 verschiebbare Umlenkrolle 4 und eine weitere Umlenkrolle 7 geführt ist, die ortsfest an einem Träger 8 angeordnet ist, wobei an dem Seil 5 ein Gewicht 9 mit Rolle 10 aufgehängt ist und das Ende 11 des Seiles 5 am Träger 8 befestigt ist. Die eine der beiden Umlenkrollen, bei dem gezeigten Ausführungsbeispiel die Umlenkrolle 4, ist mit einem Initiator 1 versehen, der bei der Bewegung des Greifers 1 und damit beim Drehen der Rolle 4 Impulse erzeugt, die entsprechend gemessen und verarbeitet werden. Durch das Aufsetzen des Greifers 1 am Meeresboden wird die Abwärtsbewegung des Seiles unterbrochen. Dieser Stillstand wird über den Initiator 12 gemessen.

Bei einem Motorhydraulikgreifer 1 gemäß Figur 2 wird das Kabel 5' für die Abschaltvorrichtung verwendet, wobei das Kabel 5' über die Umlenkrolle 4 mit dem Initiator 12 zum Greifer 1 und über die weitere Umlenkrolle 7 über das Gewicht 9 mit der Rolle 10 zum Träger 8 geführt ist.

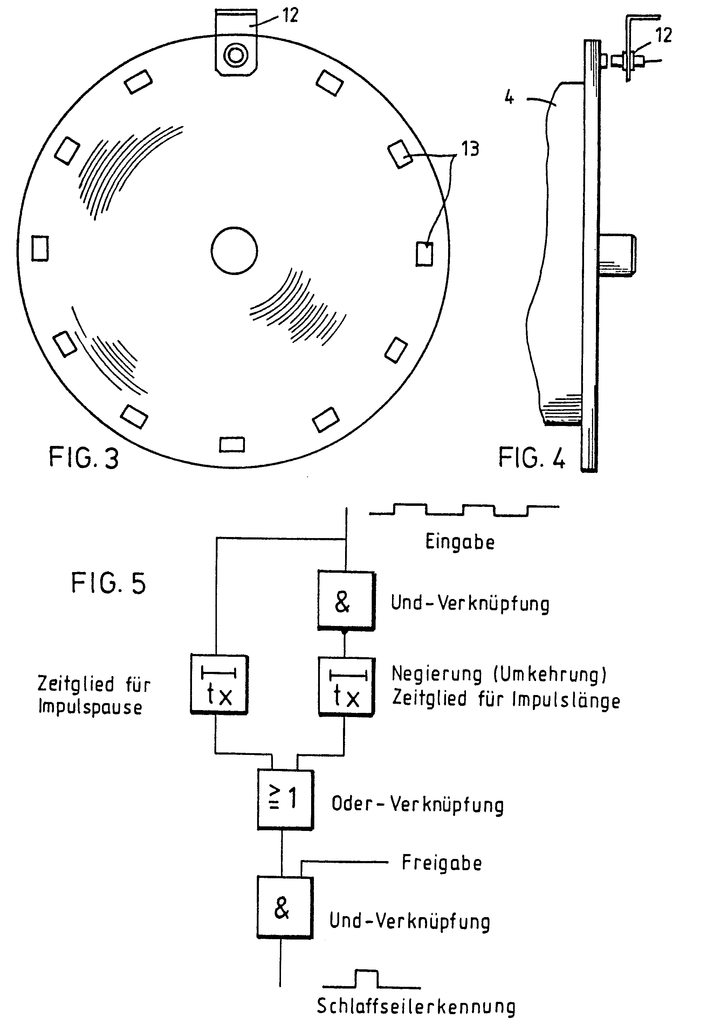

Die Figuren 3 und 4 zeigen ein erstes Ausführungsbeispiel für die Ausgestaltung des Initiators 12, wobei gleichmäßig am Umfang der Umlenkrolle 4 verteilt, Segmente 13 angeordnet sind, die die gebrauchten Impulse auslösen. Bei dem dargestellten berührungslosen Initiator handelt es sich um einen Schalter, der durch einen eingebauten Schwingkreis in Resonanz versetzt wird. Durch das Vorbeigleiten der aus Eisen gefertigten Segmente 13, wird die Resonanz gedämpft und zu einem Impuls ausgewertet. Die einzelnen Impulse werden hierbei entsprechend der Drehung der Umlenkrolle 4 erzeugt und mit Hilfe einer Impulsüberwachung in einer Elekronikanordnung (Figur 5) ausgewertet. Kommt der Impuls nicht mehr in gleichmäßigen Abständen oder wird er dauernd oder gar nicht gemeldet, wird das Hubwerk 3 abgeschaltet. Somit ist auch gewährleistet, daß z.B. das Fehlen eines Segmentes 13, ein Defekt des Schalters oder ein unterbrochenes Kabel sofort als Stillstand gemeldet wird und dadurch das Hubwerk 3 nicht mehr im Senksinne bewegt werden kann. Dies ergibt eine zusätzliche Sicherheitseinrichtung, die die Krananlage vor größeren Schäden bewahren kann.

Diese Art der Abschaltung kann auch dazu verwendet werden, um eine exakte Tiefenmessung vorzunehmen. Die Impulse des Initiators werden z.B. auf einem Display sichtbar gemacht oder von einem konventionellen Schreiber kontinuierlich aufgezeichnet. Diese laufenden Überwachungen dienen auch der Sicherheit bei der vollautomatischen Baggerung, d.h. es werden rechtzeitig Kaminbaggerungen erkannt oder unterschiedliche Böschungsverhältnisse festgestellt, die normalerweise Verschüttungsgefahren mit sich bringen.

Anstelle des in den Figuren 3 und 4 gezeigten Prinzips kann auch als Initiator 12 ein Magnetschalter vorgesehen sein, wobei in diesem Falle die Segmente 13 aus magnetisiertem Eisen gefertigt sind, die einen Mikroschalter, der mit einem gegenpoligen Magnet ausgerüstet ist, beim Vorbeigleiten anzieht, bzw. abfallen läßt. Darüberhinaus besteht die Möglichkeit an der Rolle 4 einen Generator anzuflanschen, der durch die Drehung der Rolle eine Spannung erzeugt. Durch das Anhalten des Rades wird die Spannungserzeugung unterbrochen und dies kann zur Abschaltung genutzt werden.

In Figur 5 ist eine mögliche Logik für das Auswerten der Impulse angegeben, wobei eine Überschreitung der Impuls- und Pausenzeit erkannt wird, sobald der Greifer 1 Grundberührung hat und die Umlenkrolle 4 zum Stillstand kommt.

**Patentansprüche**

1. Abschaltvorrichtung für Krananlagen mit einem eine Haltewinde aufweisenden Hubwerk für einen an Seilen aufgehängten Greifer, dadurch gekennzeichnet, daß am Greifer (1) ein Seil (5) oder Kabel (5') angebracht ist, das über Umlenkrollen (4, 7) geführt und gespannt ist, und daß an einer der Umlenkrollen (4) ein Initiator (12) angebracht ist, der Impulse erzeugt und beim Ausbleiben der Impulse den Antrieb abschaltet.

2. Abschaltvorrichtung nach Anspruch 1, dadurch gekennzeichnet, daß an dem Seil (5) oder Kabel (5') ein Gewicht (9) mit Rolle (10) aufgehängt ist.

3. Abschaltvorrichtung nach Anspruch 1, dadurch gekennzeichnet, daß ein berührungsloser Initiator (12) vorgesehen ist, der durch einen eingebauten Schwingkreis in Resonanz versetzbar ist, wobei auf der Umlenkrolle (4) die Schwingungen dämpfende und damit Impulse erzeugende Eisensegmente (13) angeordnet sind.

4. Abschaltvorrichtung nach Anspruch 1, dadurch gekennzeichnet, daß an der Umlenkrolle (4) ein Magnetschalter angeordnet ist, bestehend aus Magnetpolen, denen ein Mikroschalter mit einem Auslösemagnet zugeordnet ist.

5. Abschaltvorrichtung nach Anspruch 1, dadurch gekennzeichnet, daß an der Umlenkrolle (4) ein Generator angeordnet ist und eine Spannungsunterbrechung als Abschaltimpuls nutzbar ist.

6. Abschaltvorrichtung nach Anspruch 1 bis 5, dadurch gekennzeichnet, daß die vom Initiator (12) erzeugten, dem Weg des Greifers (1) proportionalen Impulse auf ein Aufzeichnungsgerät übertragen werden.

**Claims**

1. Interruption device for crane systems comprising hoisting gear, including a holding winch, for a grab suspended by ropes, characterised in that a rope (5) or cable (5') guided and tensioned by means of guide pulleys (4, 7) is attached to the grab (1), and that an initiator (12) is fitted to one of the guide pulleys (4), said initiator (12) generating pulses and the drive being interrupted upon failure of the pulses.

2. Interruption device according to claim 1, characterised in that a weight (9) with a pulley (10) is suspended by the rope (5) or cable (5').

3. Interruption device according to claim 1, characterised in that there is provided a non-contacting initiator (12) which can be brought into resonance by means of an in-built oscillatory circuit, the vibration-damping and thus pulse-generating iron segments (13) being arranged on the guide pulley (4).

4. Interruption device according to claim 1, characterised in that a magnetically operated switch is arranged on the guide pulley (4), said switch consisting of magnetic poles with which is associated a microswitch having a release magnet.

5. Interruption device according to claim 1, characterised in that a generator is arranged on the guide pulley (4) and an interruption in the voltage can be used as an interrupting pulse.

6. Interruption device according to claim 1, characterised in that the pulses generated by the initiator (12) in proportion to the path of the grab (1) are transmitted to a recording apparatus.

**Revendications**

1. Dispositif de déconnexion pour des installations de grues comprenant un dispositif de levage avec un treuil de retenue pour une benne preneuse suspendue à des câbles, caractérisé en ce que sur la benne preneuse (1) est accroché une corde (5) ou un câble (5') passé sur des poulies de renvoi (4, 7) et que sur l'une des poulies de renvoi (4) est fixé un initiateur (12) qui génère des impulsions et déconnecte le mécanisme d'entraînement en cas d'absence d'impulsions.

2. Dispositif de déconnexion selon la revendication 1, caractérisé en ce que sur la corde (5) ou le câble (5') est accroché un poids (9) avec une poulie (10).

3. Dispositif de déconnexion selon la revendication 1, caractérisé en ce qu'il comprend un initiateur (12) sans contact qui peut être mis en résonance par un circuit oscillant incorporé, des segments de fer (13) qui amortissent les oscillations et génèrent ainsi des impulsions étant montés sur la poulie de renvoi (4).

4. Dispositif de déconnexion selon la revendication 1, caractérisé en ce que la poulie de renvoi (4) porte un commutateur magnétique constitué de pôles magnétiques auxquels est associé un micro-rupteur équipé d'un électro-aimant de déclenchement.

5. Dispositif de déconnexion selon la revendication 1, caractérisé en ce que sur la poulie de renvoi (4) est monté un générateur et qu'une coupure de la tension peut être utilisée comme impulsion de rupture.

6. Dispositif de déconnexion selon l'une des revendications 1 à 5, caractérisé en ce que les impulsions générées par l'initiateur (12) et proportionnelles au déplacement de la benne preneuse (1) sont transmises à un appareil enregistreur.

FIG. 1

FIG. 2

FIG. 3

12

13

FIG. 4

4

12

FIG. 5

Eingabe

& Und-Verknüpfung

Zeitglied für
Impulspause

t x

t x

Negierung (Umkehrung)
Zeitglied für Impulslänge

≥ 1 Oder-Verknüpfung

Freigabe

& Und-Verknüpfung

Schlaffseilerkennung

7